(19) Europäisches Patentamt
European Patent Office
Office européen des brevets

(11) **EP 3 282 656 A1**

(12) **EUROPEAN PATENT APPLICATION**
published in accordance with Art. 153(4) EPC

(43) Date of publication:
**14.02.2018 Bulletin 2018/07**

(51) Int Cl.:
***H04L 25/03*** *(2006.01)*

(21) Application number: **16776051.1**

(86) International application number:
**PCT/CN2016/076461**

(22) Date of filing: **16.03.2016**

(87) International publication number:
**WO 2016/161876 (13.10.2016 Gazette 2016/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.04.2015  CN 201510166735**

(71) Applicant: **China Academy of
Telecommunications Technology
Haidian District
Beijing 100191 (CN)**

(72) Inventors:
• **XING, Yanping**
**Beijing 100191 (CN)**
• **SHEN, Zukang**
**Beijing 100191 (CN)**
• **GAO, Xuejuan**
**Beijing 100191 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **INFORMATION TRANSMISSION METHOD AND DEVICE**

(57)    An information transmission method is provided, including steps of: in the case that a local end serves as a transmitting end and information for the local end needs to be repeatedly transmitted within a repetition time period containing a plurality of subframes, determining, by the local end, a scrambling code corresponding to each transmission time period of the repetition time period, each transmission time period corresponding to an identical scrambling code; and with respect to each transmission time period, scrambling, by the local end, a bit stream acquired after encoding the information transmitted within the transmission time period using the scrambling code corresponding to the transmission time period, and transmitting, by the local end, the scrambled bit stream to an opposite end.

in the case that a local end serves as a transmitting end and information for the local end needs to be repeatedly transmitted within a repetition time period containing a plurality of subframes, determining, by the local end, a scrambling code corresponding to each transmission time period of the repetition time period, each transmission time period corresponding to an identical scrambling code

*202*

with respect to each transmission time period, scrambling, by the local end, a bit stream acquired after encoding the information transmitted within the transmission time period using the scrambling code corresponding to the transmission time period, and transmitting, by the local end, the scrambled bit stream to an opposite end

*204*

Fig.2

EP 3 282 656 A1

**Description**

**CROSS-REFERENCE TO RELATED APPLICATION**

The present application claims a priority of the Chinese patent application No.201510166735.6 filed on April 9, 2015, which is incorporated herein by reference in its entirety.

**TECHNICAL FIELD**

The present disclosure relates to the field of communication technology, in particular to an information transmission method and an information transmission device.

**BACKGROUND**

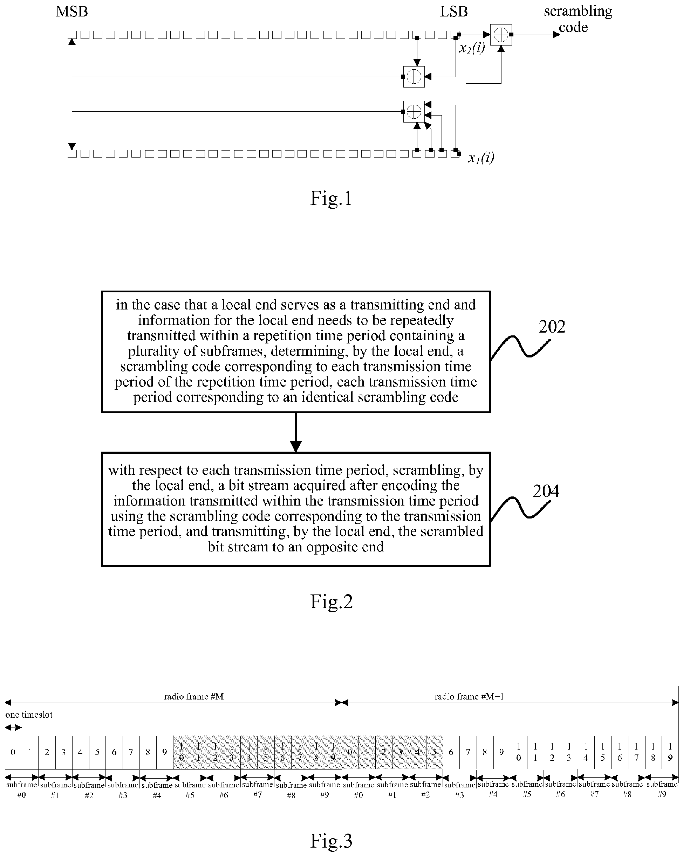

In order to achieve interference randomization for neighboring cells with a same frequency, a sequence scrambling mode is applied to a Long Term Evolution (LTE) system, i.e., a pseudorandom sequence is added at a time domain and a frequency domain. The pseudorandom sequence c(n), i.e., a scrambling code, is a Gold code having a shift register unit length L of 31 and a period of $2^{31}$-1. Fig.1 shows the generation of the scrambling code. The scrambling code is generated through modular two addition of two m sequences $x_1(i)$ and $x_2(i)$ each having the shift register unit length L of 31 (a length between a Most Significant Bit (MSB) and a Least Significant Bit (LSB)).

To be specific, a feedback polynomial for the generation of a first m sequence $x_1(i)$ of a shift register unit is $D^{31} + D^3 + D^2 + D + 1$. An initial value of $x_1(n)$ is relevant to a channel type and system information, and an initialization period of xi(n) is relevant to the channel type. The generation of the first m sequence will be described as follows: $x_1(i)$

is    determined    in    accordance    with    $c_{init}$,    i=0,    1, ...,    30,    where    $C_{\mathrm{init}} = \sum_{i=0}^{30} x_1(i) \times 2^i$ ,    and $x_1(n+31)=(x_1(n+3)+x_1(n+2)+x_1(n+1)+x_1(n))\mathrm{mod}2$.

A feedback polynomial for the generation of a second m sequence $x_2(i)$ of the shift register unit is $D^{31} + D^3 +1$. For an initial sequence value, $x_2(0)=1, x_2(n)=0, n=1,2,...,30$. The generation of the second m sequence will be described as follows. $x_2(0)=1, x_2(n)=0, n=1,2,...,30$, $x_2(n+31)=(x_2(n+3)+x_2(n))\mathrm{mod}2$, and $n=0,1,...,M_{PN}-1$, where $M_{PN}$ represents a length of the generated sequence c(n).

After acquiring the values of the first m sequence and the second m sequence, the Gold sequence c(n) may be acquired through the following equation: $c(n)=(x_1(n)+x_2(n))\mathrm{mod}2$.

The first m sequence is relevant to the channel type and the system information, and the second m sequence is given. For example, for a Physical Downlink Shared Channel (PDSCH) and a Physical Uplink Shared Channel (PUSCH) which carry both uplink data and downlink data, the first m sequence may be initialized at the beginning of each subframe, and the initial value $c_{init}$ is relevant to a cell Identity (ID) $N_{ID}^{cell}$, a Radio Network Temporary Identity (RNTI) $n_{RNTI}$ of a User Equipment (UE), a codeword number q and a timeslot number $n_s$ (a subframe number $\lfloor n_s/2 \rfloor$), and at this time, the initial value may be calculated through the following equation: $c_{\mathrm{init}} = n_{\mathrm{RNTI}} \times 2^{14} + q \times 2^{13} + \lfloor n_s/2 \rfloor \times 2^9 + N_{\mathrm{ID}}^{\mathrm{cell}}$. Similarly, for a Physical Downlink Control Channel (PDCCH), the first m sequence may also be initialized at the beginning of each subframe, and the initial value $c_{init}$ is relevant to the cell ID $N_{ID}^{cell}$ and the timeslot number $n_s$ (a subframe number $\lfloor n_s/2 \rfloor$), and at this time, the initial value may be calculated through the following equation: $c_{\mathrm{init}} = \lfloor n_s/2 \rfloor \times 2^9 + N_{\mathrm{ID}}^{\mathrm{cell}}$.

It can be seen that, in the related art, the scrambling code is generated through the modular two addition of the first m sequence and the second m sequence, and the first m sequence varies along with the subframe, so the scrambling code on each subframe in an identical physical channel may vary along with the subframe.

In a Machine Type Communications (MTC) project, in order to enhance the coverage of an MTC device in a deep-fading scenario, a method for repeatedly transmitting information at the time domain through the physical channel has been proposed, so as to increase a Signal-to-Noise Ratio (SNR) for the data reception. In order to achieve the coverage enhancement of at most 15dB, the information needs to be transmitted for up to dozens or hundreds of times. In order to reduce the repeated transmission times of the information as possible, thereby to alleviate the decrease of the system spectral efficiency due to the repeated transmission as possible, cross-subframe channel estimation has been proposed as an effective measure. The so-called cross-subframe channel estimation refers to joint channel estimation performed in accordance with the information within a plurality of consecutive subframes by means of channel correlation. As a typical treatment way, a weighted averaging operation is performed on a plurality of results of the subframe channel estimation, and correspondingly, coherent combination is performed on data sections on the premise that the same information is transmitted within the subframes for combination. However, in the related art, in order to achieve the interference randomization, the scrambling code for an identical physical channel varies along with the subframe, so in the case that the known scrambling method is adopted, different information may be transmitted within the subframes for the coherent combination, and thereby it is impossible for an opposite end to perform the coherent combination.

In a word, in the related art, in the case of scrambling the information transmitted within each subframe using the known scrambling method, the scrambling code may vary along with each subframe, so different information may be transmitted within the subframes. At this time, different information may be received by the opposite end within the subframes for the coherent combination, so it is impossible for the opposite end to perform the coherent combination, and thereby it is impossible to prevent the decrease in the system spectral efficiency due to the repeated transmission of the information.

## SUMMARY

An object of the present disclosure is to provide an information transmission method and an information transmission device, so as to scramble, within each transmission time period, information to be transmitted in the transmission time period using a scrambling code corresponding to the transmission time period, and enable the scrambled information transmitted in different subframes with each transmission time period to be identical to each other, thereby to enable an opposite end to perform coherent combination on the information received within the transmission time period and prevent the decrease in the system spectral efficiency due to the repeated transmission of the information.

In one aspect, the present disclosure provides in some embodiments an information transmission method, including steps of: in the case that a local end serves as a transmitting end and information for the local end needs to be repeatedly transmitted within a repetition time period containing a plurality of subframes, determining, by the local end, a scrambling code corresponding to each transmission time period of the repetition time period, each transmission time period corresponding to an identical scrambling code; and with respect to each transmission time period, scrambling, by the local end, a bit stream acquired after encoding the information transmitted within the transmission time period using the scrambling code corresponding to the transmission time period, and transmitting the scrambled bit stream to an opposite end.

According to the information transmission method in the embodiments of the present disclosure, the information to be transmitted in each transmission time period is scrambled within the transmission time period using the scrambling code corresponding to the transmission time period, and each transmission time period corresponds to an identical scrambling code. Because the same information is transmitted within the transmission time period and the same scrambling code is used to scramble the information to be transmitted within the transmission time period, the same scrambled information may be acquired, i.e., the same scrambled information may be transmitted in different subframes within each transmission time period. At this time, it is able for the opposite end to perform coherent combination on the information received within the transmission time period. As compared with the related art where it is impossible for the opposite end to perform the coherent combination because the scrambling code of each subframe varies along with the subframe and the different scrambled information is transmitted in the subframes, in the embodiments of the present disclosure, the information to be transmitted within each transmission time period may be scrambled within the transmission time period using an identical scramble code and the same scrambled information may be transmitted in different subframes within each transmission time period, so it is able for the opposite end to perform the coherent combination on the information received within the transmission time period, thereby to prevent the decrease in the system spectral efficiency due to the repeated transmission of the information. In addition, because each transmission time period corresponds to an identical scrambling code and different transmission time periods probably correspond to different scrambling codes, the scrambling code may vary in unit of transmission time period within the entire repetition time period, so it is able to ensure the interference randomization to some extent.

According to a possible embodiment of the present disclosure, in the above information transmission method, the step of determining, by the local end, the scrambling code corresponding to each transmission time period of the repetition time period includes: determining, by the local end, transmission time periods of the repetition time period, each transmission time period including a plurality of consecutive subframes, the consecutive subframes including uplink subframes or downlink subframes; and with respect to each transmission time period, determining, by the local end, the scrambling code corresponding to the transmission time period in accordance with a subframe number of a start subframe in the plurality of consecutive subframes within the transmission time period.

According to a possible embodiment of the present disclosure, in the above information transmission method, the step of, with respect to each transmission time period, determining, by the local end, the scrambling code corresponding to the transmission time period in accordance with the subframe number of the start subframe in the plurality of consecutive subframes within the transmission time period includes, with respect to each transmission time period, generating, by the local end, a first m sequence in accordance with the subframe number of the start subframe in the plurality of consecutive subframes within the transmission time period, and generating, by the local end, the scrambling code corresponding to the transmission time period in accordance with the first m sequence and a predetermined second m sequence.

According to a possible embodiment of the present disclosure, in the above information transmission method, prior to the step of determining the transmission time periods of the repetition time period, the information transmission method further includes pre-storing in the local end and the opposite end the number of the consecutive subframes; or determining, by one of the local end and the opposite end that is a network side device, the number of the consecutive subframes, and notifying, by the network device, the number of the consecutive subframes to the other one of the local end and the opposite end that is a UE.

According to a possible embodiment of the present disclosure, in the above information transmission method, the step of determining, by the local end, the transmission time periods of the repetition time period includes: determining, by the local end, the transmission time periods of the repetition time period starting from a start time point of the repetition time period in accordance with the number of the consecutive subframes.

According to a possible embodiment of the present disclosure, in the above information transmission method, in the case of determining, by the network side device, the number of the consecutive subframes, the network side device determines the number of the consecutive subframes in accordance with a channel condition of the UE.

According to a possible embodiment of the present disclosure, in the above information transmission method, the step of notifying, by the network side device, the number of the consecutive subframes to the other one of the local end and the opposite end that is a UE includes: notifying, by the network side device, the number of the consecutive subframes to the UE through high-layer signaling or Downlink Control Information (DCI).

According to a possible embodiment of the present disclosure, in the above information transmission method, the scrambling code corresponding to each transmission time period of the repetition time period is pre-stored in the local end and the opposite end; or the scrambling code corresponding to each transmission time period is transmitted by the local end to the opposite end so as to instruct the opposite end, upon the receipt of the information transmitted from the local end, descramble the information transmitted by the local end within each transmission time period using the scrambling code corresponding to the transmission time period.

According to a possible embodiment of the present disclosure, the information transmission method further includes: in the case that the local end serves as a receiving end, receiving, by the local end, information transmitted from the opposite end within each transmission time period, each transmission time period corresponding to an identical scrambling code; scrambling a bit stream acquired after encoding the information transmitted within any transmission time period using the scrambling code corresponding to the transmission time period; and with respect to the information transmitted from the opposite end within each transmission time period, determining, by the local end, a scrambling code corresponding to the transmission time period, and descrambling the information transmitted from the opposite end within the transmission time period according to the determined scrambling code.

In another aspect, the present disclosure provides in some embodiments an information transmission device, comprising: a first processing unit configured to, in the case that information needs to be repeatedly transmitted within a repetition time period containing a plurality of subframes, determine a scrambling code corresponding to each transmission time period of the repetition time period, each transmission time period corresponding to an identical scrambling code; a second processing unit connected to the first processing unit and configured to, with respect to each transmission time period, scramble a bit stream acquired after encoding the information transmitted within the transmission time period using the scrambling code corresponding to the transmission time period; and a transmission unit connected to the second processing unit and configured to transmit the scrambled bit stream to an opposite end.

According to the information transmission device in the embodiments of the present disclosure, the information to be transmitted in each transmission time period is scrambled within the transmission time period using the scrambling code corresponding to the transmission time period, and each transmission time period corresponds to an identical scrambling code. Because the same information is transmitted within the transmission time period and the same scrambling code is used to scramble the information to be transmitted within the transmission time period, the same scrambled information may be acquired, i.e., the same scrambled information may be transmitted in different subframes within each transmission time period. At this time, it is able for the opposite end to perform coherent combination on the information received within the transmission time period. As compared with the related art where it is impossible for the opposite end to perform the coherent combination because the scrambling code of each subframe varies along with the subframe and the different scrambled information is transmitted in the subframes, in the embodiments of the present disclosure, the information to be transmitted within each transmission time period may be scrambled within the transmission time period using an identical scramble code and the same scrambled information may be transmitted in different subframes within each transmission time period, so it is able for the opposite end to perform the coherent combination on the information received within the transmission time period, thereby to prevent the decrease in the system spectral efficiency due to the repeated transmission of the information. In addition, because each transmission time period corresponds to an identical scrambling code and different transmission time periods probably correspond to different scrambling codes, the scrambling code may vary in unit of transmission time period within the entire repetition time period, so it is able to ensure the interference randomization to some extent.

According to a possible embodiment of the present disclosure, in the above information transmission device, in the case of determining the scrambling code corresponding to each transmission time period of the repetition time period, the first processing unit is further configured to: determine transmission time periods of the repetition time period, each transmission time period including a plurality of consecutive subframes, the consecutive subframes including uplink subframes or downlink subframes; and with respect to each transmission time period, determine the scrambling code corresponding to the transmission time period in accordance with a subframe number of a start subframe in the plurality of consecutive subframes within the transmission time period.

According to a possible embodiment of the present disclosure, in the above information transmission device, the first processing unit is further configured to, with respect to each transmission time period, generate a first m sequence in accordance with the subframe number of the start subframe in the plurality of consecutive subframes within the transmission time period, and generate the scrambling code corresponding to the transmission time period in accordance with the first m sequence and a predetermined second m sequence.

According to a possible embodiment of the present disclosure, in the above information transmission device, the number of the consecutive subframes is pre-stored in the first processing unit; or in the case that the information transmission device is a network side device, the first processing unit is further configured to determine the number of the consecutive subframes prior to determining the transmission time periods of the repetition time period, and the transmission unit is further configured to notify the number of the consecutive subframes to a UE.

According to a possible embodiment of the present disclosure, in the above information transmission device, in the case of determining the transmission time periods of the repetition time period, the first processing unit is further configured to determine the transmission time periods of the repetition time period starting from a start time point of the repetition time period in accordance with the number of the consecutive subframes.

According to a possible embodiment of the present disclosure, in the above information transmission device, in the case of determining the number of the consecutive subframes, the first processing unit is further configured to determine the number of the consecutive subframes in accordance with a channel condition of the UE.

According to a possible embodiment of the present disclosure, in the above information transmission device, in the case of notifying the number of the consecutive subframes to the UE, the transmission unit is further configured to notify the number of the consecutive subframes to the UE through high-layer signaling or DCI.

According to a possible embodiment of the present disclosure, in the above information transmission device, the first processing unit is further configured to pre-store therein the scrambling code corresponding to each transmission time period of the repetition time period, or the transmission unit is further configured to transmit the scrambling code corresponding to each transmission time period to the opposite end so as to instruct the opposite end, upon the receipt of the information transmitted from a local end comprising the information transmission device, descramble the information transmitted by the local end within each transmission time period using the scrambling code corresponding to the transmission time period.

According to a possible embodiment of the present disclosure, in the above information transmission device, the information transmission device further includes a reception unit connected to the first processing unit and configured to receive information transmitted from the opposite end within each transmission time period, each transmission time period corresponding to an identical scrambling code, a bit stream acquired after encoding the information transmitted within any transmission time period being scrambled using the scrambling code corresponding to the transmission time period. The first processing unit is further configured to, with respect to the information transmitted from the opposite end within each transmission time period, determine a scrambling code corresponding to the transmission time period, and descramble the information transmitted from the opposite end within the transmission time period according to the determined scrambling code.

In yet another aspect, the present disclosure provides in some embodiments an information transmission device, including a processor, a memory and a transceiver. The processor is configured to read a program stored in the memory, so as to: in the case that information needs to be repeatedly transmitted within a repetition time period containing a plurality of subframes, determine a scrambling code corresponding to each transmission time period of the repetition time period, each transmission time period corresponding to an identical scrambling code; with respect to each transmission time period, scramble a bit stream acquired after encoding the information transmitted within the transmission time period using the scrambling code corresponding to the transmission time period; and transmit through the transceiver the scrambled bit stream to an opposite end. The transceiver is configured to receive and transmit data. The processor takes charge of managing bus architecture and general processings, and the memory is capable of storing therein data for the operation of the processor.

BRIEF DESCRIPTION OF THE DRAWINGS

Fig.1 is a schematic view showing a principle of the generation of a scrambling code in the related art;

Fig.2 is a flow chart of an information transmission method according to one embodiment of the present disclosure;

Fig.3 is a schematic view showing the allocation of subframes for a PDSCH during a repetition time period according to one embodiment of the present disclosure;

Fig.4 is a schematic view showing the allocation of the subframes for a PUSCH during the repetition time period according to one embodiment of the present disclosure;

Fig.5 is a schematic view showing the allocation of the subframes for a Physical Uplink Control Channel (PUCCH) during the repetition time period according to one embodiment of the present disclosure;

Fig.6 is a schematic view showing the allocation of the subframes for a PDCCH during the repetition time period according to one embodiment of the present disclosure;

Fig.7 is a schematic view showing an information transmission device according to one embodiment of the present disclosure;

Fig.8 is another schematic view showing the information transmission device at a network side according to one embodiment of the present disclosure; and

Fig.9 is yet another schematic view showing the information transmission device at a UE side according to one embodiment of the present disclosure.

DETAILED DESCRIPTION OF THE EMBODIMENTS

The information transmission method and the information transmission device of the present disclosure will be described hereinafter in conjunction with the drawings and embodiments.

The present disclosure provides in some embodiments an information transmission method which, as shown in Fig.2, includes: Step 202 of, in the case that a local end serves as a transmitting end and information for the local end needs to be repeatedly transmitted within a repetition time period containing a plurality of subframes, determining, by the local end, a scrambling code corresponding to each transmission time period of the repetition time period, each transmission time period corresponding to an identical scrambling code; and Step 204 of, with respect to each transmission time period, scrambling, by the local end, a bit stream acquired after encoding the information transmitted within the transmission time period using the scrambling code corresponding to the transmission time period, and transmitting, by the local end, the scrambled bit stream to an opposite end.

According to the information transmission method in the embodiments of the present disclosure, the information to be transmitted in each transmission time period is scrambled within the transmission time period using the scrambling code corresponding to the transmission time period, and each transmission time period corresponds to an identical scrambling code. Because the same information is transmitted within the transmission time period and the same scrambling code is used to scramble the information to be transmitted within the transmission time period, the same scrambled information may be acquired, i.e., the same scrambled information may be transmitted in different subframes within each transmission time period. At this time, it is able for the opposite end to perform coherent combination on the information received within the transmission time period. As compared with the related art where it is impossible for the opposite end to perform the coherent combination because the scrambling code of each subframe varies along with the subframe and the different scrambled information is transmitted in the subframes, in the embodiments of the present disclosure, the information to be transmitted within each transmission time period may be scrambled within the transmission time period using an identical scramble code and the same scrambled information may be transmitted in different subframes within each transmission time period, so it is able for the opposite end to perform the coherent combination on the information received within the transmission time period, thereby to prevent the decrease in the system spectral efficiency due to the repeated transmission of the information. In addition, because each transmission time period corresponds to an identical scrambling code and different transmission time periods probably correspond to different scrambling codes, the scrambling code may vary in unit of transmission time period within the entire repetition time period, so it is able to ensure the interference randomization to some extent.

It should be appreciated that, the repetition time period may include at least one transmission time period, each transmission time period may correspond to an identical scrambling code, and different transmission time periods may correspond to an identical scrambling code or different scrambling codes.

It should be further appreciated that, in the embodiment of the present disclosure, the information transmitted in the physical channel may include, e.g. data and/or control information, and the local end and the opposite end may each be a network side device (e.g., a base station) or a UE. Obviously, in the case that the local end is the network side device, the opposite end is the UE, and in the case that the local end is the UE, the opposite end is the network side device.

According to a possible embodiment of the present disclosure, in the above information transmission method, the information transmission method may further include: receiving, by the local end, information transmitted from the opposite end within each transmission time period, each transmission time period corresponding to an identical scrambling code; scrambling a bit stream acquired after encoding the information transmitted within any transmission time period using the scrambling code corresponding to the transmission time period; and with respect to the information transmitted from the opposite end within each transmission time period, determining, by the local end, a scrambling code corresponding to the transmission time period, and descrambling the information transmitted from the opposite end within the transmission time period according to the determined scrambling code.

During the implementation, the opposite end may scramble the bit stream acquired after encoding the information using the scrambling code corresponding to each transmission time period in the case of transmitting the information with the transmission time period, so in the case of receiving the information transmitted from the opposite end within each transmission time period, the local end needs to determine the scrambling code corresponding to the transmission time period, and then descramble the information transmitted from the opposite end within the transmission time period in accordance with the determined scrambling code.

According to a possible embodiment of the present disclosure, in the above information transmission method, the step of determining, by the local end, the scrambling code corresponding to each transmission time period of the repetition time period includes: determining, by the local end, transmission time periods of the repetition time period, each transmission time period including a plurality of consecutive subframes, the consecutive subframes including uplink subframes or downlink subframes; and with respect to each transmission time period, determining, by the local end, the scrambling code corresponding to the transmission time period in accordance with a subframe number of a start subframe in the plurality of consecutive subframes within the transmission time period.

During the implementation, each transmission time period may include the plurality of consecutive subframes, and the scrambling code corresponding to the transmission time period may be determined in accordance with the subframe number of the start subframe in the plurality of consecutive subframes within the transmission time period. At this time, each transmission time period may correspond to an identical scrambling code, and the information transmitted within the transmission time period may be scrambled using the scrambling code corresponding to the transmission time period, so the same scrambled information may be acquired.

It should be appreciated that, the scrambling code corresponding to each transmission time period is determined in accordance with the subframe number of the start subframe in the plurality of consecutive subframes within the transmission time period, so in the case that the start subframes in the plurality of consecutive subframes within any two transmission time periods have an identical subframe number, the scrambling codes corresponding to the two transmission time periods may be identical to each other, and in the case that the start subframes in the plurality of consecutive subframes within any two transmission time periods have different subframe numbers, the scrambling codes corresponding to the two transmission time periods may be different from each other too.

According to a possible embodiment of the present disclosure, in the above information transmission method, the step of, with respect to each transmission time period, determining, by the local end, the scrambling code corresponding to the transmission time period in accordance with the subframe number of the start subframe in the plurality of consecutive subframes within the transmission time period includes, with respect to each transmission time period, generating, by the local end, a first m sequence in accordance with the subframe number of the start subframe in the plurality of consecutive subframes within the transmission time period, and generating, by the local end, the scrambling code corresponding to the transmission time period in accordance with the first m sequence and a predetermined second m sequence.

During the implementation, the scrambling code may include the first m sequence and the second m sequence. The first m sequence may be relevant to a channel type and system information. For example, for a PUSCH and a PDSCH carrying uplink and downlink data, the first m sequence may be initialized at the beginning of each subframe. An initial value $c_{init}$ may be relevant to a cell ID $N_{ID}^{cell}$, a RNTI $n_{RNTI}$ of a UE, a codeword number q and a timeslot number $n_s$ (a subframe number $\lfloor n_s/2 \rfloor$), and the initial value may be calculated through the following equation:

$$c_{\mathrm{init}} = n_{\mathrm{RNTI}} \times 2^{14} + q \times 2^{13} + \left\lfloor n_s/2 \right\rfloor \times 2^9 + N_{\mathrm{ID}}^{\mathrm{cell}} .$$

Similarly, for a PDCCH, the first m sequence may also be initialized at the beginning of each subframe. The initial value $c_{init}$ may be relevant to the cell ID $N_{ID}^{cell}$ and the timeslot number $n_s$ (a subframe number $\lfloor n_s/2 \rfloor$), and the initial value may be calculated through the following equation:

$$c_{\mathrm{init}} = \left\lfloor n_s/2 \right\rfloor \times 2^9 + N_{\mathrm{ID}}^{\mathrm{cell}} .$$

Hence, in the case of determining the scrambling code corresponding to each transmission time period, the first m sequence in the scrambling code corresponding to the transmission time period may be initialized in accordance with the subframe number of the start subframe in the plurality of consecutive subframes within the transmission time period, and then the scrambling code corresponding to the transmission time period may be generated in accordance with the first m sequence and the predetermined second m sequence. For example, the scrambling code may be generated through modular two addition of the first m sequence and the second m sequence.

According to a possible embodiment of the present disclosure, prior to the step of determining the transmission time periods of the repetition time period, the information transmission method further includes pre-storing in the local end and the opposite end the number of the consecutive subframes; or determining, by one of the local end and the opposite end that is a network side device, the number of the consecutive subframes, and notifying, by the one of the local end and the opposite end, the number of the consecutive subframes to the other one of the local end and the opposite end that is a UE.

According to a possible embodiment of the present disclosure, in the above information transmission method, the step of determining, by the local end, the transmission time periods of the repetition time period includes: determining, by the local end, the transmission time periods of the repetition time period starting from a start time point of the repetition time period in accordance with the number of the consecutive subframes.

During the implementation, the local end and the opposite end may pre-store therein the number of the consecutive subframes in accordance with a protocol agreement, or the one of the local end and the opposite end that is the network device may determine the number of the consecutive subframes and then notify the number of the consecutive subframes to the UE. Upon the determination of the number of the consecutive subframes within each transmission time period, the transmission time periods of the repetition time period may be determined by taking the start time point of the transmission time period as a starting point, thereby to determine the scrambling code corresponding to each transmission time period. Then, the information transmitted within the transmission time period may be scrambled using the scrambling code corresponding to the transmission time period, and the scrambled information may be transmitted to the opposite end.

According to a possible embodiment of the present disclosure, in the above information transmission method, the scrambling code corresponding to each transmission time period of the repetition time period is pre-stored in the local end and the opposite end; or the scrambling code corresponding to each transmission time period is transmitted by the local end to the opposite end so as to instruct the opposite end, upon the receipt of the information transmitted from the local end, descramble the information transmitted by the local end within each transmission time period using the scrambling code corresponding to the transmission time period.

During the implementation, the local end and the opposite end may pre-store therein the number of the consecutive subframes, or the one of the local end and the opposite end that is the network side device may determine the number of the consecutive subframes and then notify the number of the consecutive subframes to the UE. Then, the UE may determine the scrambling code corresponding to each transmission time period in accordance with the number of the consecutive subframes.

Of course, in a possible embodiment of the present disclosure, the local end and the opposite end may pre-store therein the scrambling code corresponding to each transmission time period of the repetition time period, or the local end may transmit the scrambling code corresponding to each transmission time period to the opposite, so as to instruct the opposite end to descramble the information transmitted from the local end within each transmission time period using the scrambling code corresponding to the transmission time period in the case of receiving the information transmitted from the local end.

According to a possible embodiment of the present disclosure, the information transmission method further includes: in the case that the local end serves as a receiving end, receiving, by the local end, information transmitted from the opposite end within each transmission time period, each transmission time period corresponding to an identical scrambling code; scrambling a bit stream acquired after encoding the information transmitted within any transmission time period using the scrambling code corresponding to the transmission time period; and with respect to the information transmitted from the opposite end within each transmission time period, determining, by the local end, a scrambling code corresponding to the transmission time period, and descrambling the information transmitted from the opposite end within the transmission time period according to the determined scrambling code.

During the implementation, in the case of transmitting the information within each transmission time period, the opposite end may scramble the bit stream acquired after encoding the information using the scrambling code corresponding to the transmission time period, so in the case of receiving the information transmitted from the opposite end within each transmission time period, the local end needs to determine the scrambling code corresponding to the transmission time period, and then descramble the information transmitted from the opposite end within the transmission time period in accordance with the determined scrambling code.

The allocation of the subframes within the repetition time period for a PDSCH, a PUSCH, a PUCCH and a PDCCH and the information transmission method will be described hereinafter in conjunction with the embodiments.

In a possible embodiment of the present disclosure, the PDSCH carrying a Downlink Shared Channel (DL-SCH) Transport Block (TB) may be taken as an example. A base station may determine that the number of the subframes for a UE within the repetition time period is smaller than 10 in accordance with a channel condition of the UE. The base station may configure for the UE the number T (T=8) of the consecutive subframes within each transmission time period in accordance with a UE dedicated Radio Resource Control (RRC) signaling. The base station may then allocate a downlink physical resource including R (R=8) subframes for the UE through a single scheduling grant, for the repetition of an identical TB, i.e., the repetition time period may include 8 subframes. At this time, a scrambling code within an $i^{th}$ subframe may be determined in accordance with the subframe number of a $(\left\lfloor \frac{i}{T} \right\rfloor \times T)^{th}$ subframe, where i=0, 1, ..., R-1. In other words, the scrambling code for the PDSCH transmission in all the allocated R subframes may be determined in accordance with the subframe number of a $0^{th}$ subframe all the time.

Taking a Frequency Division Duplexing (FDD) system as an example, as shown in Fig.3, presumed that the base station has configured for the UE consecutive 8 subframes (starting from a subframe #5 of a radio frame #M) for the repetition using an identical DL-SCH TB, the base station may perform baseband signal treatment on the bit stream acquired after a channel encoding operation on the TB in accordance with a relevant procedure.

To be specific, for each codeword q, presumed that a data bit stream before the scrambling is $b^{(q)}(0),...,$ $b^{(q)}(M_{bit}^{(q)}-1)$ (where $M_{bit}^{(q)}$ represents the number of bits in the codeword q to be transmitted on the PDSCH in one subframe), the base station may scramble the data bit stream through the following equation: $\tilde{b}^q(i)=(b^q(i)+c^q(i))\mathrm{mod}2$. A pseudorandom sequence c(i), i.e., the scrambling code, may be generated through modular two addition of the two m sequences, i.e.,

$$c(n) = \left(x_1(n + N_C) + x_2(n + N_C)\right)\mathrm{mod}\,2$$

$$x_1(n+31) = \left(x_1(n+3) + x_1(n+2) + x_1(n+1) + x_1(n)\right)\mathrm{mod}\,2,$$

$$x_2(n+31) = \left(x_2(n+3) + x_2(n)\right)\mathrm{mod}\,2$$

where $N_c$=1600. The first m sequence may be initialized in accordance with $c_{\mathrm{init}} = \sum_{i=0}^{30} x_1(i) \cdot 2^i$, and the initial value $c_{init}$ may be calculated through the following equation: $c_{init} = n_{RNTI} \cdot 2^{14} + q \cdot 2^{13} + \left\lfloor n_s / 2 \right\rfloor \cdot 2^9 + N_{ID}^{cell}$. The second m sequence may be initialized in accordance with $x_1(0)=1, x_1(n)=0, n=1,2,...,30$.

The scrambling code $c^{(q)}(i)$ is the same in each of the 8 subframes, and $n_s$ is always determined in accordance with the $0^{th}$ subframe allocated by the base station, i.e., the timeslot number $n_s$ is 0 and the subframe number $\llcorner n_s/2 \lrcorner$ is 5. Further, presumed that the base station performs the transmission using a single codeword, i.e., q=0, the initial value $c_{init}$ may be calculated through the following equation:

$$c_{init} = n_{RNTI} \cdot 2^{14} + \left\lfloor n_s / 2 \right\rfloor \cdot 2^9 + N_{ID}^{cell}.$$

Correspondingly, the UE may receive the scheduling grant from the base station, so as to acquire resource allocation information. In the allocated 8 consecutive subframes, the UE may descramble the PDSCH using an identical scrambling code $c^{(q)}(i)$. In the scrambling code, the initial value of the first m sequence may be determined in accordance with the $0^{th}$ subframe, i.e., the first m sequence may be initialized in accordance with $c_{init} = n_{RNTI} \cdot 2^{14} + \left\lfloor n_s / 2 \right\rfloor \cdot 2^9 + N_{ID}^{cell}$, where the subframe number $\llcorner n_s/2 \lrcorner$ is 5.

In a possible embodiment of the present disclosure, the PUSCH carrying an Uplink Shared Channel (UL-SCH) TB may be taken as an example. The base station may allocate an uplink physical resource including R (R=20) subframes for the UE through a single scheduling grant, for a plurality of transmissions of an identical TB, i.e., the repetition time period include 20 subframes. The base station may determine that the number of the subframes is 4 for cross-subframe channel estimation in accordance with a channel condition of the UE, and notify the UE of the number of the subframes for the cross-subframe channel estimation through DCI. The number of the consecutive subframes within each transmission time period is equal to the number of the subframes for cross-subframe channel estimation, so the number T of the consecutive subframes within each transmission time period is 4. The initialization of scrambling code sequence in the i$^{th}$ subframe may be determined in accordance with the subframe number of a $(\lfloor \frac{i}{T} \rfloor \times T)^{th}$ subframe, where i=0, 1, ..., R-1.

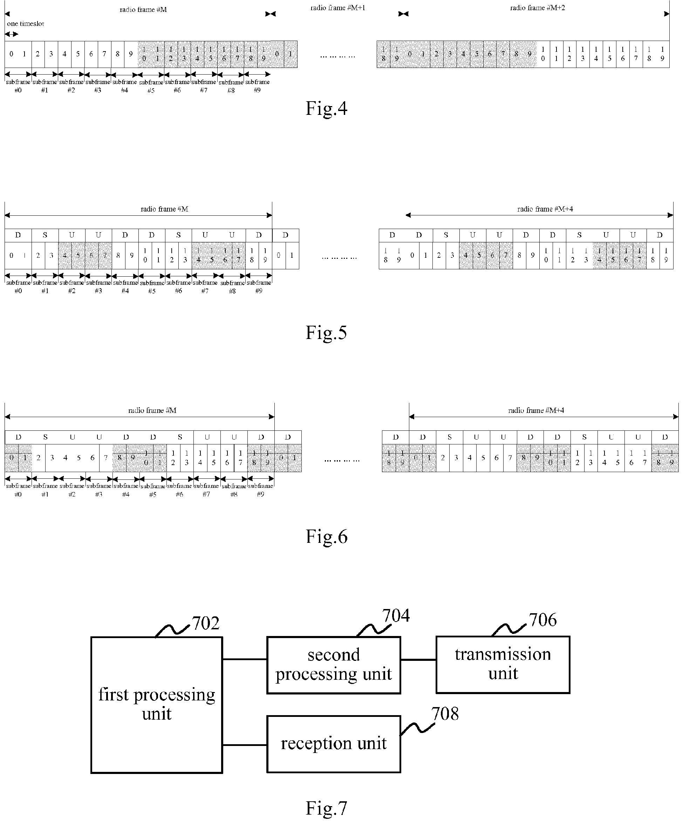

Taking the FDD system as an example, as shown in Fig.4, presumed that the base station has configured for the UE consecutive 20 subframes (starting from the subframe #5 of the radio frame #M) for the plurality of transmissions using an identical UL-SCH TB, the base station may perform baseband signal treatment on the bit stream acquired after a channel encoding operation on the TB in accordance with a relevant procedure.

To be specific, presumed that a data bit stream before the scrambling is $b(0),...,b(M_{bit}-1)$ (where $M_{bit}$ represents the number of bits to be transmitted), the base station may scramble the data bit stream as follows, and the scrambled sequence is $\tilde{b}(0),...,\tilde{b}(M_{bit}-1)$.

$$\text{set } i = 0$$

$$\text{while } i < \text{Mbit}$$

$$\text{if } b(i) = x$$

$$\tilde{b}(i) = 1$$

$$\text{else}$$

$$\text{if } b(i) = y$$

$$\tilde{b}(i) = \tilde{b}(i-1)$$

$$\text{else}$$

$$\tilde{b}(i) = (b(i) + c(i)) \bmod 2$$

$$\text{end if}$$

$$i = i + 1$$

$$\text{end while}$$

A pseudorandom sequence $c(i)$ may be generated in a way identical to that for the PDSCH carrying the DL-SCH TB mentioned above, i.e., through the modular two addition of the two m sequences. The initial value of the first m sequence may be determined through the following equation:

$$c_{init} = n_{RNTI} \cdot 2^{14} + q \cdot 2^{13} + \lfloor n_s/2 \rfloor \cdot 2^9 + N_{ID}^{cell},$$

where q=0, i.e.,

$$c_{init} = n_{RNTI} \cdot 2^{14} + \lfloor n_s/2 \rfloor \cdot 2^9 + N_{ID}^{cell}.$$

The pseudorandom sequence $c(i)$ is the same in every 4 subframes in the 20 subframes, i.e., the scrambling codes in subframes #5, #6, #7 and #8 in the radio frame #M are the same, the scrambling codes in a subframe #9 of a radio frame #M and subframes #0, #1 and #2 of a radio frame #M+1 are the same, the scrambling codes in subframes #3, #4, #5 and #6 of the radio subframe #M+1 are the same, the scrambling codes in subframes #7, #8 and #9 of the radio frame #M+1 and a subframe #0 of the radio frame #M+2 are the same, and the scrambling codes in subframes #1, #2, #3 and #4 in the radio frame #M+2 are the same, wherein $n_s$ may be determined in accordance with a subframe number of a first subframe in the four subframes where the scrambling codes are the same. For example, for subframes #5, #6, #7 and #8 of the radio frame #M, $n_s$=10, so the subframe number $\lfloor n_s/2 \rfloor$ = 5; and for subframes #1, #2, #3 and #4 of the radio frame #M+2, $n_s$=2, so the subframe number $\lfloor n_s/2 \rfloor$= 1.

In a possible embodiment of the present disclosure, the PUCCH format 2 carrying the UL-SCH TB may be taken as an example. The base station may configure for the UE an uplink physical resource including R (R=20) subframes through a single scheduling grant, for the plurality of transmissions of an identical TB, i.e., the number of the subframes within the repetition time period is 20. The base station may, through a protocol, agree with the UE that the number of the consecutive subframes within each transmission time period is 2. In each subframe, the PUCCH may carry a part of bit streams acquired after the channel encoding operation on the UL-SCH TB, and the same encoded bit streams are carried in two consecutive subframes. The initialization of the scrambling code sequence in the $i^{th}$ subframe may be determined in accordance with the subframe number of the $\left( \left\lfloor \dfrac{i}{T} \right\rfloor \times T \right)^{th}$ subframe, i=0,1,...,R-1.

Taking uplink/downlink configuration #1 of a Time Division Duplexing (TDD) system as an example, as shown in Fig.5, presumed that the base station has configured for the UE 20 subframes, i.e., subframes #2, #3, #7 and #8 in radio frames #M to #M+4, for the PUCCH transmission, and the UE may scramble the bit stream $b(0),...,b(19)$ of 20 bits in accordance with a relevant procedure through the following equation: $\tilde{b}(i)=(b(i)+c(i))\bmod 2$.

The pseudorandom sequence $c(i)$ may be generated in a way identical to that for the PDSCH carrying the DL-SCH TB mentioned above, i.e., through the modular two addition of the two m sequences. The initial value of the first m sequence may be determined through the following equation:

$$ c_{\mathrm{init}} = \left( \lfloor n_s/2 \rfloor +1 \right) \cdot \left( 2 N_{\mathrm{ID}}^{\mathrm{cell}} +1 \right) \cdot 2^{16} + n_{\mathrm{RNTI}} $$.

The pseudorandom sequence $c(i)$ is the same in every 2 subframes in the 20 subframes, i.e., the scrambling codes in subframes #2 and #3 in the radio frame #M are the same, the scrambling codes in subframes #7 and #8 of the radio frame #M are the same, ..., and the scrambling codes in subframes #7 and #8 of the radio frame #M+4 are the same, wherein $n_s$ may be determined according to the subframe number of the first subframe in the two subframes where the scrambling codes are the same. For subframes #2 and #3 in the radio frame #M, $n_s$=4, so the subframe number $\lfloor n_s/2 \rfloor$ = 2. For subframes #7 and #8 in the radio frame #M, $n_s$=14, so the subframe number $\lfloor n_s/2 \rfloor$= 7. The initialization of a scrambling code sequence is merely relevant to the subframe number rather than the radio frame number, so the scrambling codes in subframes #2 and #3 of the radio frame #M are identical to the scrambling codes in subframes #2 and #3 of the radio frames #M+1, #M+2, #M+3 and #M+4. Identically, the scrambling codes in subframes #7 and #8 of the radio frame #M are identical to the scrambling codes in subframes #7 and #8 of the radio frames #M+1, #M+2, #M+3 and #M+4.

In a possible embodiment of the present disclosure, the PDCCH carrying DCI may be taken as an example. The base station may notify, through system broadcasting, the number T of the consecutive subframes within each transmission time period. The base station may, starting from a specific subframe, scramble the PDCCH using an identical scrambling code in the T consecutive subframes. Further, the scrambling code sequence may be determined in accordance with the first subframe in the consecutive subframes.

Taking uplink/downlink configuration #1 of the TDD system as an example, as shown in Fig.6, through protocol agreement, the scrambling codes for the PDCCH in the T consecutive downlink subframes starting from a subframe (where (A×*SFN*+i-*offset*)modT=0) may be identical to each other, and the scrambling code may be determined in accordance with the subframe number of the first subframe in the T consecutive downlink subframes, where A represents the number of downlink subframes in a radio frame (for the FDD system, A=10), i represents the subframe number of the downlink subframe in a radio frame (in the uplink/downlink configuration 1 of the TDD system, for subframe #0, i=0; for subframe #4, i=1; for subframe #5, i=2, and for subframe #9, i=3), and for the FDD system, i is equal to the subframe number.

In the case that the base station broadcasts that offset=1 through the system, the PDCCH may use the identical scrambling code in the two consecutive subframes starting from the subframe where (4×SFN+i-1)mod2 = 0, and i=0,1,2,3 (i.e., subframes #0, #4, #5 and #9). In other words, the scrambling codes in subframes #4 and #5 are identical to each other in an identical radio frame, and the scrambling code in subframe #9 of the radio frame #M is identical to the scrambling code in subframe #0 of the radio frame #M+1.

The base station may scramble the bit streams

$$b^{(0)}(0),...,b^{(0)}(M_{\text{bit}}^{(0)}-1),b^{(1)}(0),...,b^{(1)}(M_{\text{bit}}^{(1)}-1),...,b^{(n_{\text{PDCCH}}-1)}(0),...,b^{(n_{\text{PDCCH}}-1)}(M_{\text{bit}}^{(n_{\text{PDCCH}}-1)}-1)$$

in accordance with a known procedure, i.e., through the following equation:

$$\widetilde{b}(i) = \big(b(i)+c(i)\big)\bmod 2 \ .$$

The pseudorandom sequence $c(i)$ is the same in subframes #4 and #5 of an identical radio frame, and subframe #9 of the radio frame #M is identical to subframe #0 of the radio frame #M+1. The pseudorandom sequence $c(i)$ may be generated in a way identical to that for the PDSCH carrying the DL-SCH TB mentioned above, i.e., through modular two addition of the two m sequences. The initial value of the first m sequence may be calculated through the following equation: $c_{\text{init}} = \lfloor n_{\text{s}}/2 \rfloor 2^9 + N_{\text{ID}}^{\text{cell}}$, where $n_{\text{s}}$ may be determined in accordance with the subframe number of the first subframe in the two subframes where the scrambling codes are the same. For subframes #4 and #5 of an identical radio frame, $n_{\text{s}}$=8, so the subframe number $\lfloor n_s/2 \rfloor$ = 4; and for subframe #9 of the radio frame #M and subframe #0 of the radio frame #M+1, $n_{\text{s}}$=18, so the subframe number $\lfloor n_s/2 \rfloor$= 9.

According to a possible embodiment of the present disclosure, in the above information transmission method, in the case of determining, by the network side device, the number of the consecutive subframes, the network side device determines the number of the consecutive subframes in accordance with a channel condition of the other one of the local end and the opposite end that is the UE.

During the implementation, the network side device may determine the number of the consecutive subframes in accordance with channel coherent time of the UE.

According to a possible embodiment of the present disclosure, in the above information transmission method, the step of notifying, by the network side device, the number of the consecutive subframes to the other one of the local end and the opposite end that is the UE includes notifying, by the network side device, the number of the consecutive subframes to the UE through high-layer signaling or DCI. The high-layer signaling may be, e.g. RRC dedicated signaling or system broadcasting.

The present disclosure further provides an information transmission device which, as shown in Fig.7, includes: a first processing unit 702 configured to, in the case that information needs to be repeatedly transmitted within a repetition time period containing a plurality of subframes, determine a scrambling code corresponding to each transmission time period of the repetition time period, each transmission time period corresponding to an identical scrambling code; a second processing unit 704 connected to the first processing unit 702 and configured to, with respect to each transmission time period, scramble a bit stream acquired after encoding the information transmitted within the transmission time period using the scrambling code corresponding to the transmission time period; and a transmission unit 706 connected to the second processing unit 704 and configured to transmit the scrambled bit stream to an opposite end.

According to the information transmission device in the embodiments of the present disclosure, the information to be transmitted in each transmission time period is scrambled within the transmission time period using the scrambling code corresponding to the transmission time period, and each transmission time period corresponds to an identical scrambling code. Because the same information is transmitted within the transmission time period and the same scrambling code is used to scramble the information to be transmitted within the transmission time period, the same scrambled information may be acquired, i.e., the same scrambled information may be transmitted in different subframes within each transmission time period. At this time, it is able for the opposite end to perform coherent combination on the information received within the transmission time period. As compared with the related art where it is impossible for the opposite end to perform the coherent combination because the scrambling code of each subframe varies along with the subframe and the different scrambled information is transmitted in the subframes, in the embodiments of the present disclosure, the information to be transmitted within each transmission time period may be scrambled within the transmission time period using an identical scramble code and the same scrambled information may be transmitted in different subframes within each transmission time period, so it is able for the opposite end to perform the coherent combination on the information received within the transmission time period, thereby to prevent the decrease in the system spectral efficiency due to the repeated transmission of the information. In addition, because each transmission time period corresponds to an identical scrambling code and different transmission time periods probably correspond to different scrambling codes, the scrambling code may vary in unit of transmission time period within the entire repetition time period, so it is able to ensure the interference randomization to some extent.

In a possible embodiment of the present disclosure, in the case of determining the scrambling code corresponding to each transmission time period of the repetition time period, the first processing unit 702 is further configured to: determine transmission time periods of the repetition time period, each transmission time period including a plurality of consecutive subframes, the consecutive subframes including uplink subframes or downlink subframes; and with respect to each transmission time period, determine the scrambling code corresponding to the transmission time period in accordance with a subframe number of a start subframe in the plurality of consecutive subframes within the transmission time period.

According to a possible embodiment of the present disclosure, in the above information transmission device, the first processing unit 702 is further configured to, with respect to each transmission time period, generate a first m sequence in accordance with the subframe number of the start subframe in the plurality of consecutive subframes within the transmission time period, and generate the scrambling code corresponding to the transmission time period in accordance with the first m sequence and a predetermined second m sequence.

According to a possible embodiment of the present disclosure, in the above information transmission device, the number of the consecutive subframes is pre-stored in the first processing unit 702; or in the case that the information transmission device is a network side device, prior to determining the transmission time periods of the repetition time period, the first processing unit 702 is further configured to determine the number of the consecutive subframes and the transmission unit 706 is further configured to notify the number of the consecutive subframes to a UE.

According to a possible embodiment of the present disclosure, in the above information transmission device, in the case of determining the transmission time periods of the repetition time period, the first processing unit 702 is further configured to determine the transmission time periods of the repetition time period starting from a start time point of the repetition time period in accordance with the number of the consecutive subframes.

According to a possible embodiment of the present disclosure, in the above information transmission device, in the case of determining the number of the consecutive subframes, the first processing unit 702 is further configured to determine the number of the consecutive subframes in accordance with a channel condition of the UE.

According to a possible embodiment of the present disclosure, in the above information transmission device, in the case of notifying the number of the consecutive subframes to the UE, the transmission unit 706 is further configured to notify the number of the consecutive subframes to the UE through high-layer signaling or DCI.

According to a possible embodiment of the present disclosure, in the above information transmission device, the first processing unit 702 is further configured to pre-store therein the scrambling code corresponding to each transmission time period of the repetition time period; or the transmission unit 706 is further configured to transmit the scrambling code corresponding to each transmission time period to the opposite end so as to instruct the opposite end, upon the receipt of the information transmitted from a local end comprising the information transmission device, descramble the information transmitted by the local end within each transmission time period using the scrambling code corresponding to the transmission time period.

According to a possible embodiment of the present disclosure, the information transmission device further includes a reception unit 708 connected to the first processing unit 702 and configured to receive information transmitted from the opposite end within each transmission time period, each transmission time period corresponding to an identical scrambling code, a bit stream acquired after encoding the information transmitted within any transmission time period being scrambled using the scrambling code corresponding to the transmission time period. The first processing unit 702 is further configured to, with respect to the information transmitted from the opposite end within each transmission time period, determine a scrambling code corresponding to the transmission time period, and descramble the information transmitted from the opposite end within the transmission time period according to the determined scrambling code.

The information transmission device in the embodiments of the present disclosure may serve as parts of, and be integrated into, the network side device and the UE. The first processor 702 and the second processing unit 704 may be processors such as Central Processing Unit (CPU), e.g., they may be two different CPUs or an identical CPU. The transmission unit 706 may be a transmitter or a signal transmitter, and the reception unit 708 may be, e.g. a receiver or a signal receiver.

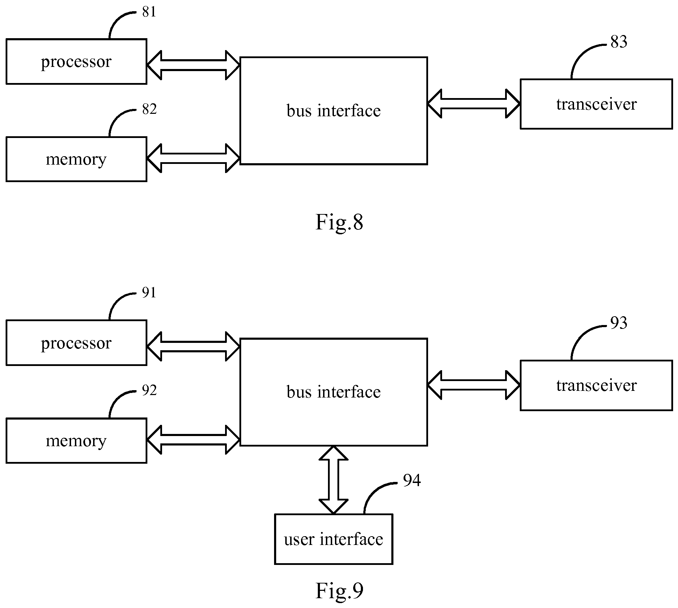

In the case that the local end or the opposite end including the information transmission device is a network side device, as shown in Fig.8, the information transmission device may include a processor 81, a memory 82 and a transceiver 83. The processor 81 is configured to read a program stored in the memory 82, so as to: in the case that information needs to be repeatedly transmitted within a repetition time period containing a plurality of subframes, determine a scrambling code corresponding to each transmission time period of the repetition time period, each transmission time period corresponding to an identical scrambling code; with respect to each transmission time period, scramble a bit stream acquired after encoding the information transmitted within the transmission time period using the scrambling code corresponding to the transmission time period; transmit through the transceiver 83 the scrambled information to a UE; receive through the transceiver 83 information from the UE within each transmission time period, each transmission time period corresponding to an identical scrambling code, a bit stream acquired after encoding the information transmitted within any transmission time period being scrambled using the scrambling code corresponding to the transmission time period; determine a scrambling code corresponding to the transmission time period, and descramble the information transmitted from the UE within the transmission time period according to the determined scrambling code. The transceiver 83 is configured to receive and transmit data under the control of the processor 81.

In Fig.8, a bus architecture may include a number of buses and bridges connected to each other, so as to connect various circuits for one or more processors such as the processor 81 and one or more memories such as the memory 82. In addition, the bus architecture may be used to connect any other circuits, such as a circuit for a peripheral device, a circuit for a voltage stabilizer and a power management circuit, which is known in the art and therefore will not be elaborated herein. Bus interfaces are provided, and the transceiver 83 may consist of a plurality of elements, i.e., a transmitter and a receiver for communication with any other devices over a transmission medium. The processor 81 may take charge of managing the bus architecture as well as general processings. The memory 82 may store data therein desired for the operation of the processor 81.

In the case that the local end or the opposite end including the information transmission device is a UE, as shown in Fig.9, the information transmission device may include a processor 91, a memory 92, a transceiver 93 and a user interface 94. The processor 91 is configured to read a program stored in the memory 92, so as to: in the case that information needs to be repeatedly transmitted within a repetition time period containing a plurality of subframes, determine a scrambling code corresponding to each transmission time period of the repetition time period, each transmission time period corresponding to an identical scrambling code; with respect to each transmission time period, scramble a bit stream acquired after encoding the information transmitted within the transmission time period using the scrambling code corresponding to the transmission time period; transmit through the transceiver 93 the scrambled bit stream to a network side device; receive through the transceiver 93 information transmitted from the network side device within each transmission time period, each transmission time period corresponding to an identical scrambling code, a bit stream acquired after encoding the information transmitted within any transmission time period being scrambled using the scrambling code corresponding to the transmission time period; determine a scrambling code corresponding to the transmission time period, and descramble the information transmitted from the UE within the transmission time period according to the determined scrambling code. The transceiver 93 is configured to receive and transmit data under the control of the processor 91.

In Fig.9, a bus architecture may include a number of buses and bridges connected to each other, so as to connect various circuits for one or more processors such as the processor 91 and one or more memories such as the memory 92. In addition, the bus architecture may be used to connect any other circuits, such as a circuit for a peripheral device, a circuit for a voltage stabilizer and a power management circuit, which is known in the art and therefore will not be elaborated herein. Bus interfaces are provided, and the transceiver 93 may consist of a plurality of elements, i.e., a transmitter and a receiver for communication with any other devices over a transmission medium. With respect to different UEs, a user interface 94 may also be provided for devices which are to be arranged inside or outside the UE, and these devices may include but not limited to a keypad, a display, a speaker, a microphone and a joystick. The processor 91 may take charge of managing the bus architecture as well as general processings. The memory 92 may store therein data desired for the operation of the processor 91.

According to the information transmission method and the information transmission device in the embodiments of the present disclosure, the information to be transmitted in each transmission time period is scrambled within the transmission time period using the scrambling code corresponding to the transmission time period, and each transmission time period corresponds to an identical scrambling code. Because the same information is transmitted within the transmission time period and the same scrambling code is used to scramble the information to be transmitted within the transmission time period, the same scrambled information may be acquired, i.e., the same scrambled information may be transmitted in different subframes within each transmission time period. At this time, it is able for the opposite end to perform coherent combination on the information received within the transmission time period, and prevent the decrease in the system spectral efficiency due to the repeated transmission of the information. In addition, because each transmission time period corresponds to an identical scrambling code and different transmission time periods probably correspond to different scrambling codes, the scrambling code may vary in unit of transmission time period within the entire repetition time period, so it is able to ensure the interference randomization to some extent.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, a person skilled in the art may make further modifications and improvements without departing from the spirit of the present disclosure, and these modifications and improvements shall also fall within the scope of the present disclosure.

## Claims

1. An information transmission method, comprising:

   in the case that a local end serves as a transmitting end and information for the local end needs to be repeatedly transmitted within a repetition time period containing a plurality of subframes, determining, by the local end, a scrambling code corresponding to each transmission time period of the repetition time period, wherein each transmission time period corresponds to an identical scrambling code; and
   with respect to each transmission time period, scrambling, by the local end, a bit stream acquired after encoding the information transmitted within the transmission time period using the scrambling code corresponding to the transmission time period, and transmitting, by the local end, the scrambled bit stream to an opposite end.

2. The information transmission method according to claim 1, wherein the step of determining, by the local end, the scrambling code corresponding to each transmission time period of the repetition time period comprises:

   determining, by the local end, transmission time periods of the repetition time period, wherein each transmission time period comprises a plurality of consecutive subframes, and the consecutive subframes comprise uplink subframes or downlink subframes; and
   with respect to each transmission time period, determining, by the local end, the scrambling code corresponding to the transmission time period in accordance with a subframe number of a start subframe in the plurality of consecutive subframes within the transmission time period.

3. The information transmission method according to claim 2, wherein the step of, with respect to each transmission time period, determining, by the local end, the scrambling code corresponding to the transmission time period in accordance with the subframe number of the start subframe in the plurality of consecutive subframes within the transmission time period comprises:

   with respect to each transmission time period, generating, by the local end, a first m sequence in accordance with the subframe number of the start subframe in the plurality of consecutive subframes within the transmission time period, and generating, by the local end, the scrambling code corresponding to the transmission time period in accordance with the first m sequence and a predetermined second m sequence.

4. The information transmission method according to claim 2, wherein prior to the step of determining the transmission time periods of the repetition time period, the information transmission method further comprises:

   pre-storing in the local end and the opposite end the number of the consecutive subframes; or
   determining, by one of the local end and the opposite end that is a network side device, the number of the consecutive subframes, and notifying, by the one of the local end and the opposite end, the number of the consecutive subframes to the other one of the local end and the opposite end that is a User Equipment (UE).

5. The information transmission method according to claim 4, wherein the step of determining, by the local end, the transmission time periods of the repetition time period comprises:

determining, by the local end, the transmission time periods of the repetition time period starting from a start time point of the repetition time period in accordance with the number of the consecutive subframes.

6. The information transmission method according to claim 4, wherein in the case of determining, by the network side device, the number of the consecutive subframes, the network side device determines the number of the consecutive subframes in accordance with a channel condition of the UE.

7. The information transmission method according to claim 4, wherein the step of notifying, by the one of the local end and the opposite end, the number of the consecutive subframes to the other one of the local end and the opposite end that is the UE comprises:

notifying, by the network side device, the number of the consecutive subframes to the UE through high-layer signaling or Downlink Control Information (DCI).

8. The information transmission method according to claim 1, further comprising:

pre-storing the scrambling code corresponding to each transmission time period of the repetition time period in the local end and the opposite end; or
transmitting, by the local end, the scrambling code corresponding to each transmission time period to the opposite end, to instruct the opposite end, upon receipt of information transmitted from the local end, descramble the information transmitted by the local end within each transmission time period using the scrambling code corresponding to the transmission time period.

9. The information transmission method according to claim 1, further comprising:

in the case that the local end serves as a receiving end, receiving, by the local end, information transmitted from the opposite end within each transmission time period, wherein each transmission time period corresponds to an identical scrambling code, and a bit stream acquired after encoding the information transmitted within any transmission time period is scrambled using the scrambling code corresponding to the transmission time period; and
with respect to the information transmitted from the opposite end within each transmission time period, determining, by the local end, a scrambling code corresponding to the transmission time period, and descrambling, by the local end, the information transmitted from the opposite end within the transmission time period according to the determined scrambling code.

10. An information transmission device, comprising:

a first processing unit configured to, in the case that information needs to be repeatedly transmitted within a repetition time period containing a plurality of subframes, determine a scrambling code corresponding to each transmission time period of the repetition time period, wherein each transmission time period corresponds to an identical scrambling code;
a second processing unit connected to the first processing unit and configured to, with respect to each transmission time period, scramble a bit stream acquired after encoding the information transmitted within the transmission time period using the scrambling code corresponding to the transmission time period; and
a transmission unit connected to the second processing unit and configured to transmit the scrambled bit stream to an opposite end.

11. The information transmission device according to claim 10, wherein in the case of determining the scrambling code corresponding to each transmission time period of the repetition time period, the first processing unit is further configured to:

determine transmission time periods of the repetition time period, wherein each transmission time period comprises a plurality of consecutive subframes, and the consecutive subframes comprise uplink subframes or downlink subframes; and
with respect to each transmission time period, determine the scrambling code corresponding to the transmission time period in accordance with a subframe number of a start subframe in the plurality of consecutive subframes within the transmission time period.

**12.** The information transmission device according to claim 11, wherein the first processing unit is further configured to:

with respect to each transmission time period, generate a first m sequence in accordance with the subframe number of the start subframe in the plurality of consecutive subframes within the transmission time period, and generate the scrambling code corresponding to the transmission time period in accordance with the first m sequence and a predetermined second m sequence.

**13.** The information transmission device according to claim 11, wherein
the number of the consecutive subframes is pre-stored in the first processing unit; or
in the case that the information transmission device is a network side device, the first processing unit is further configured to determine the number of the consecutive subframes prior to determining the transmission time periods of the repetition time period, and the transmission unit is further configured to notify the number of the consecutive subframes to a UE.

**14.** The information transmission device according to claim 13, wherein in the case of determining the transmission time periods of the repetition time period, the first processing unit is further configured to determine the transmission time periods of the repetition time period starting from a start time point of the repetition time period in accordance with the number of the consecutive subframes.

**15.** The information transmission device according to claim 13, wherein in the case of determining the number of the consecutive subframes, the first processing unit is further configured to determine the number of the consecutive subframes in accordance with a channel condition of the UE.

**16.** The information transmission device according to claim 13, wherein in the case of notifying the number of the consecutive subframes to the UE, the transmission unit is further configured to notify the number of the consecutive subframes to the UE through high-layer signaling or DCI.

**17.** The information transmission device according to claim 10, wherein
the first processing unit is further configured to pre-store therein the scrambling code corresponding to each transmission time period of the repetition time period; or
the transmission unit is further configured to transmit the scrambling code corresponding to each transmission time period to the opposite end, to instruct the opposite end, upon the receipt of information transmitted from a local end comprising the information transmission device, descramble the information transmitted by the local end within each transmission time period using the scrambling code corresponding to the transmission time period.

**18.** The information transmission device according to claim 10, further comprising:

a reception unit connected to the first processing unit and configured to receive information transmitted from the opposite end within each transmission time period, wherein each transmission time period corresponds to an identical scrambling code, and a bit stream acquired after encoding the information transmitted within any transmission time period is scrambled using the scrambling code corresponding to the transmission time period, wherein the first processing unit is further configured to, with respect to the information transmitted from the opposite end within each transmission time period, determine a scrambling code corresponding to the transmission time period, and descramble the information transmitted from the opposite end within the transmission time period according to the determined scrambling code.

**19.** An information transmission device, comprising a processor, a memory and a transceiver, wherein
the processor is configured to read a program stored in the memory to:

in the case that information needs to be repeatedly transmitted within a repetition time period containing a plurality of subframes, determine a scrambling code corresponding to each transmission time period of the repetition time period, wherein each transmission time period corresponds to an identical scrambling code; and with respect to each transmission time period, scramble a bit stream acquired after encoding the information transmitted within the transmission time period using the scrambling code corresponding to the transmission time period; and

transmit through the transceiver the scrambled bit stream to an opposite end,

the transceiver is configured to receive and transmit data, and
the processor takes charge of managing bus architecture and general processings, and the memory is capable of storing therein data for operation of the processor.

MSB                                                                LSB        scrambling
                                                                                code

$x_2(i)$

$x_1(i)$

Fig.1

in the case that a local end serves as a transmitting end and
information for the local end needs to be repeatedly
transmitted within a repetition time period containing a
plurality of subframes, determining, by the local end, a
scrambling code corresponding to each transmission time
period of the repetition time period, each transmission time
period corresponding to an identical scrambling code

202

with respect to each transmission time period, scrambling, by
the local end, a bit stream acquired after encoding the
information transmitted within the transmission time period
using the scrambling code corresponding to the transmission
time period, and transmitting, by the local end, the scrambled
bit stream to an opposite end

204

Fig.2

| radio frame #M | | | | | | | | | | radio frame #M+1 | | | | | | | | | |
|---|---|---|---|---|---|---|---|---|---|---|---|---|---|---|---|---|---|---|---|

one timeslot

| 0 | 1 | 2 | 3 | 4 | 5 | 6 | 7 | 8 | 9 | 10 | 11 | 12 | 13 | 14 | 15 | 16 | 17 | 18 | 19 | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|---|---|---|---|---|---|---|---|---|---|---|---|---|---|---|---|---|---|---|

| subframe #0 | subframe #1 | subframe #2 | subframe #3 | subframe #4 | subframe #5 | subframe #6 | subframe #7 | subframe #8 | subframe #9 | subframe #0 | subframe #1 | subframe #2 | subframe #3 | subframe #4 | subframe #5 | subframe #6 | subframe #7 | subframe #8 | subframe #9 |
|---|---|---|---|---|---|---|---|---|---|---|---|---|---|---|---|---|---|---|---|

Fig.3

Fig.4

Fig.5

Fig.6

Fig.7

81

processor

82

memory

bus interface

83

transceiver

Fig.8

91

processor

92

memory

bus interface

93

transceiver

94

user interface

Fig.9

# INTERNATIONAL SEARCH REPORT

| International application No. |
|---|
| **PCT/CN2016/076461** |

## A. CLASSIFICATION OF SUBJECT MATTER

H04L 25/03 (2006.01) i

According to International Patent Classification (IPC) or to both national classification and IPC

## B. FIELDS SEARCHED

Minimum documentation searched (classification system followed by classification symbols)

H04B; H04L; H04W

Documentation searched other than minimum documentation to the extent that such documents are included in the fields searched

Electronic data base consulted during the international search (name of data base and, where practicable, search terms used)

CNABS; CNTXT; CNKI; VEN: repeat+, re w transmi+, scrimbl+, period, sub?frame?

## C. DOCUMENTS CONSIDERED TO BE RELEVANT

| Category* | Citation of document, with indication, where appropriate, of the relevant passages | Relevant to claim No. |
|---|---|---|
| A | US 2014098761 A1 (INTERDIGITAL PATENT HOLDINGS), 10 April 2014 (10.04.2014), description, paragraphs [0051]-[0052] | 1-19 |
| A | CN 102710418 A (KUANG-CHI INNOVATION TECHNOLOGY LTD.), 03 October 2012 (03.10.2012), description, paragraphs [0005] and [0008]-[0009] | 1-19 |
| A | CN 101827430 A (DATANG MOBILE COMMUNICATIONS EQUIPMENT CO., LTD.), 08 September 2010 (08.09.2010), the whole document | 1-19 |
| A | CN 101350936 A (HUAWEI TECHNOLOGIES CO., LTD.), 21 January 2009 (21.01.2009), the whole document | 1-19 |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 25 May 2016 (25.05.2016) | **12 June 2016 (12.06.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**REN, Ling**<br><br>Telephone No.: (86-10) **62088423** |
|---|---|

Form PCT/ISA/210 (second sheet) (July 2009)

## INTERNATIONAL SEARCH REPORT
### Information on patent family members

| International application No. |
| --- |
| **PCT/CN2016/076461** |

| Patent Documents referred in the Report | Publication Date | Patent Family | Publication Date |
| --- | --- | --- | --- |
| US 2014098761 A1 | 10 April 2014 | KR 20150064196 A | 10 June 2015 |
| | | CN 104704884 A | 10 June 2015 |
| | | EP 2904850 A1 | 12 August 2015 |
| | | TW 201429174 A | 16 July 2014 |
| | | WO 2014055878 A1 | 10 April 2014 |
| | | JP 2015537422 A | 24 December 2015 |
| CN 102710418 A | 03 October 2012 | None | |
| CN 101827430 A | 08 September 2010 | CN 101827430 B | 06 June 2012 |
| CN 101350936 A | 21 January 2009 | None | |

Form PCT/ISA/210 (patent family annex) (July 2009)

**EP 3 282 656 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510166735